(19) Europäisches Patentamt
European Patent Office
Office européen des brevets

(11) **EP 4 621 665 A1**

(12) **EUROPEAN PATENT APPLICATION**

(43) Date of publication:
**24.09.2025 Bulletin 2025/39**

(21) Application number: **24223412.8**

(22) Date of filing: **27.12.2024**

(51) International Patent Classification (IPC):
**G06N 10/60** (2022.01)

(52) Cooperative Patent Classification (CPC):
**G06N 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.03.2024 JP 2024045781**

(71) Applicant: **FUJITSU LIMITED**
**Kawasaki-shi, Kanagawa 211-8588 (JP)**

(72) Inventor: **LIU, Yu**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING PROGRAM, INFORMATION PROCESSING METHOD, AND INFORMATION PROCESSING DEVICE**

(57) An information processing program including instructions for causing a computer coupled to an Ising machine and a quantum processing unit (QPU), to execute processing including: determining, for a quantum circuit of a quantum approximate optimization algorithm (QAOA) corresponding to the combinatorial optimization problem (COP), a first value of a parameter of the QAOA such that energy corresponding to a quantum state of the quantum circuit is locally minimized; calculating a first solution to the COP, by using the Ising machine having an Ising model corresponding to the COP; determining a second value of the parameter from the first value such that a probability that the quantum state of the quantum circuit matches the first solution is maximized; and calculating a second solution to the COP, by causing the QPU to calculate the second solution based on the quantum circuit in which the second value of the parameter is set.

# FIG. 5

**Description**

FIELD

The embodiments discussed herein are related to an information processing program, an information processing method, and an information processing device.

BACKGROUND

A quantum approximate optimization algorithm that solves a combinatorial optimization problem has existed from the past. For example, in the quantum approximate optimization algorithm, a combinatorial optimization problem is solved by repeating a series of processes of "specifying a quantum state of a quantum circuit, specifying energy corresponding to the specified quantum state, and changing a parameter of the quantum circuit, based on the specified energy".

The prior techniques include, for example, one that maps a cost function associated with a combinatorial optimization problem to an optimization problem in an acceptable quantum state. In addition, for example, there is a technique in which an artificial intelligence (AI) control unit determines one or more adjustable parameters corresponding to calculation. Furthermore, for example, there is a technique of calculating an objective function of a combinatorial optimization problem from second information extracted from first information and used for processing formulated as a combinatorial optimization problem. In addition, for example, there is a technique for approximating unitary quantum dynamics. Furthermore, for example, there is a technique of retrieving an arrangement of shapes subjected to a boundary distance constraint between shapes.

Examples of the related art include: Japanese National Publication of International Patent Application No. 2021-504805, Japanese National Publication of International Patent Application No. 2022-509841, International Publication Pamphlet No. WO 2022/113720, U.S. Patent Application Publication No. 2014/0297247, and U.S. Patent Application Publication No. 2011/0035194.

SUMMARY

TECHNICAL PROBLEM

However, with the existing techniques, it is difficult to efficiently solve the combinatorial optimization problem. For example, the expected time taken to solve the combinatorial optimization problem is likely to increase. Specifically, in the quantum approximate optimization algorithm, the energy and a parameter of the quantum circuit may sometimes have a non-convex relationship, and the expected time taken to appropriately change the parameter tends to increase, which causes a disadvantage that it is difficult to locate an optimal parameter.

In one form, an object of the embodiments is to facilitate solving a combinatorial optimization problem.

SOLUTION TO PROBLEM

According to an aspect of the embodiments, there is provided an information processing program including instructions which, when executed by a computer which is coupled to an Ising machine and a quantum processing unit, cause the computer to execute processing including: determining, for a quantum circuit of a quantum approximate optimization algorithm that corresponds to the combinatorial optimization problem, a first value of a parameter of the quantum approximate optimization algorithm such that energy that corresponds to a quantum state of the quantum circuit is locally minimized; calculating a first solution to the combinatorial optimization problem, by using the Ising machine that has an Ising model corresponding to the combinatorial optimization problem; determining a second value of the parameter from the determined first value of the parameter such that a probability that the quantum state of the quantum circuit matches the calculated first solution is maximized; and calculating a second solution to the combinatorial optimization problem, by causing the quantum processing unit to calculate the second solution based on the quantum circuit in which the determined second value of the parameter is set.

ADVANTAGEOUS EFFECTS OF INVENTION

According to one mode, solving a combinatorial optimization problem may be facilitated.

BRIEF DESCRIPTION OF DRAWINGS

FIG. 1 is an explanatory diagram illustrating an exemplary embodiment of an information processing method according to an embodiment;

FIG. 2 is an explanatory diagram illustrating an example of an information processing system 200;

FIG. 3 is a block diagram illustrating an exemplary hardware configuration of an information processing device 100;

FIG. 4 is a block diagram illustrating an exemplary functional configuration of the information processing device 100;

FIG. 5 is an explanatory diagram (part 1) illustrating an example of the operation of the information processing device 100;

FIG. 6 is an explanatory diagram (part 2) illustrating an example of the operation of the information processing device 100;

FIG. 7 is an explanatory diagram (part 3) illustrating an example of the operation of the information processing device 100;

FIG. 8 is an explanatory diagram (part 4) illustrating an example of the operation of the information processing device 100;

FIG. 9 is an explanatory diagram (part 5) illustrating an example of the operation of the information processing device 100;

FIG. 10 is a flowchart illustrating an example of an overall processing procedure;

FIG. 11 is a flowchart illustrating an example of a first determination processing procedure;

FIG. 12 is a flowchart illustrating an example of a second determination processing procedure; and

FIG. 13 is a flowchart illustrating an example of a third determination processing procedure.

DESCRIPTION OF EMBODIMENTS

Hereinafter, an information processing program, an information processing method, and an information processing device according to the embodiments will be described in detail with reference to the drawings.

(Exemplary Embodiment of Information Processing Method According to Embodiment)

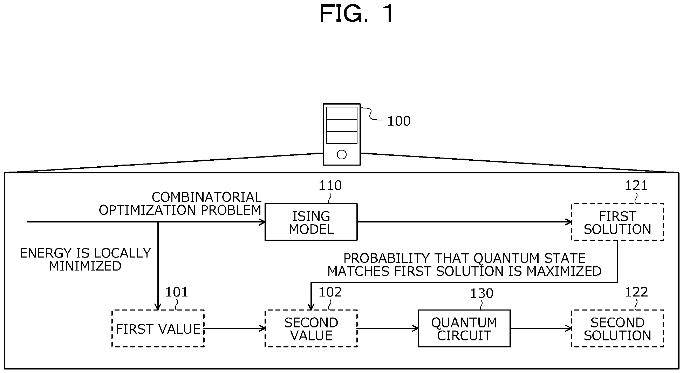

FIG. 1 is an explanatory diagram illustrating an exemplary embodiment of the information processing method according to an embodiment. An information processing device 100 is a computer for solving a combinatorial optimization problem. The information processing device 100 is a server, a personal computer (PC), or the like, for example.

Here, the combinatorial optimization problem is a problem of finding a solution to a combination of variables so as to optimize a value of an objective function under a constraint condition. As an approach for solving the combinatorial optimization problem, for example, a simulated annealing (SA) method, a quantum approximate optimization algorithm, or the like has traditionally existed. In the following description, the quantum approximate optimization algorithm will be sometimes abbreviated as "QAOA".

The SA method is an approach for solving the combinatorial optimization problem by repeatedly searching for a solution to a combination of variables while adjusting a range for searching for a solution to a combination of variables, for example, using thermal noise. The SA method is also called, for example, an annealing method. The QAOA is an approach based on, for example, a variational quantum algorithm. The QAOA is an approach of solving the combinatorial optimization problem, using, for example, a quantum circuit representing a quantum state corresponding to a combination of variables.

Specifically, the QAOA solves the combinatorial optimization problem by repeating a series of processes of "specifying a quantum state of a quantum circuit, specifying energy corresponding to the specified quantum state, and changing a parameter of the quantum circuit, based on the specified energy". The QAOA examines the distribution of energies in all classical states, for example, with a quantum superposition state. Specifically, the QAOA uses a grid method, a Broyden-Fletcher-Goldfarb-Shanno (BFGS) method, a quadratic approximation method, a Powell method, Bayesian estimation, or the like when changing a parameter of the quantum circuit.

For the QAOA, for example, Reference Document 1 listed below can be referred to. For the grid method, for example, Reference Document 2 listed below can be referred to. For the BFGS method, for example, Reference Document 3 listed below can be referred to. For the quadratic approximation method, for example, Reference Document 4 listed below can be referred to. For the Bayesian estimation, for example, Reference Document 5 listed below can be referred to.

Reference Document 1: Farhi, Edward, Jeffrey Goldstone, and Sam Gutmann. "A quantum approximate optimization algorithm." arXiv preprint arXiv: 1411.4028 (2014).

Reference Document 2: Streif, Michael, and Martin Leib. "Forbidden subspaces for level-1 quantum approximate optimization algorithm and instantaneous quantum polynomial circuits." Physical Review A 102.4 (2020): 042416.

Reference Document 3: Streif, Michael, and Martin Leib. "Training the quantum approximate optimization algorithm without access to a quantum processing unit." Quantum Science and Technology 5.3 (2020): 034008.

Reference Document 4: Shaydulin, Ruslan, and Yuri Alexeev. "Evaluating quantum approximate optimization algorithm: A case study." 2019 tenth international green and sustainable computing conference (IGSC). IEEE, 2019.

Reference Document 5: Tibaldi, Simone, et al. "Bayesian Optimization for QAOA." arXiv preprint arXiv:2209.03824 (2022).

However, it has been difficult from the past to efficiently solve the combinatorial optimization problem. For example, the expected time taken to solve the combinatorial optimization problem is likely to increase. Specifically, in the SA method, as the initial value is farther from the optimal solution, the expected time taken to solve the combinatorial optimization problem and locate the optimal solution tends to increase. The quantum annealing method has a similar tendency. For this tendency, for example, Reference Document 6 listed below can be referred to.

Reference Document 6: Katzgraber, Helmut G., et al. "Seeking quantum speedup through spin glasses: The good, the bad, and the ugly." Physical Review X 5.3 (2015): 031026.

In addition, specifically, in the QAOA, the energy and a parameter of the quantum circuit may sometimes have a non-convex relationship, and the expected time taken to appropriately change the parameter tends to increase, which causes a disadvantage that it is difficult to locate an optimal parameter. Therefore, even with the QAOA, the expected time taken to solve the combinatorial optimization problem is likely to increase.

Thus, in the present embodiment, an information processing method capable of facilitating solving a combinatorial optimization problem will be described.

In FIG. 1, the information processing device 100 acquires a combinatorial optimization problem. The information processing device 100 acquires, for example, an objective function min (E = C(z)) of the combinatorial optimization problem. For example, z denotes a state and represents a combination of variables. For example, E denotes energy.

Here, it is desirable to find a state z that minimizes E = C(z), which is a solution to the combinatorial optimization problem. The information processing device 100 sets, for example, a quantum circuit 130 representing a quantum state corresponding to the state z and having a QAOA corresponding to the combinatorial optimization problem. The quantum circuit 130 serves as, for example, a QAOA Ansatz. The quantum state stochastically represents, for example, each possible value of the state z.

(1-1) The information processing device 100 determines a first value 101 of a parameter of the quantum circuit 130 such that the energy corresponding to the quantum state of the QAOA quantum circuit 130 is locally minimized. The energy corresponds, for example, to a measured value of $<\psi(\gamma, \beta) \mid C(z) \mid \psi(\gamma, \beta)>$. This allows the information processing device 100 to approximate the quantum circuit 130 to an eigenvalue problem. For approximating the quantum circuit 130 to an eigenvalue problem, for example, Reference Document 7 listed below can be referred to.

Reference Document 7: Peruzzo, Alberto, et al. "A variational eigenvalue solver on a photonic quantum processor." Nature communications 5.1 (2014): 4213.

(1-2) The information processing device 100 calculates a first solution 121 to the combinatorial optimization problem, based on an Ising model 110 corresponding to the acquired combinatorial optimization problem. For example, the information processing device 100 may use an Ising machine implemented with the Digital Annealer ™ to calculate a state $z_0$ relevant to the first solution 121 to the combinatorial optimization problem, based on the Ising model 110 implemented by the Digital Annealer ™ and the set initial value. The initial value is preset by a user, for example. The initial value is, for example, a value of the state z.

(1-3) The information processing device 100 determines a second value 102 of the parameter of the quantum circuit 130 from the determined first value 101 of the parameter of the quantum circuit 130 such that the probability that the set quantum state of the quantum circuit 130 matches the calculated first solution 121 is maximized.

This may allow the information processing device 100 to facilitate solving the combinatorial optimization problem. The information processing device 100 may appropriately set a parameter of the quantum circuit 130 with reference to the first solution 121 calculated using the Ising model 110 and may promote reduction of the expected time taken to perform the QAOA.

(1-4) The information processing device 100 calculates a second solution 122 to the combinatorial optimization problem, based on the quantum circuit 130 in which the determined second value 102 of the parameter is set. The information processing device 100 conducts n-shot sampling on the quantum state, using, for example, a quantum processing unit (QPU), and calculates a state z1 relevant to the second solution 122.

Specifically, the information processing device 100 repeatedly performs Z-direction projection measurement of the quantum state represented by the quantum circuit 130 in which the determined second value 102 of the parameter is set, to obtain the state z n times, and calculates the state z1 relevant to the second solution 122, based on the obtained distribution of the state z. This may allow the information processing device 100 to acquire the state z1 that is relatively close to the optimal solution and regarded as a preferable solution.

(1-5) The information processing device 100 may set the calculated state z1 as a new initial value and repeatedly perform a series of processes indicated by (1-1), (1-2), (1-3), and (1-4) until a convergence condition is satisfied. The convergence condition is, for example, that the series of processes is performed a predetermined number of times. This may allow the information processing device 100 to accurately solve the combinatorial optimization problem. The information processing device 100 may acquire the state z1 that is closer to the optimal solution and regarded as a preferable solution.

Here, for example, assuming that the combinatorial optimization problem is a MaxCut problem, a case of solving the combinatorial optimization problem without approximating the quantum circuit 130 to the eigenvalue problem is conceivable. In this case, when a depth p of the quantum circuit 130 is relatively small, the quantum circuit 130 is not allowed to represent the whole aspect of the combinatorial optimization problem, and it may sometimes be difficult to accurately solve the combinatorial optimization problem. Meanwhile, the information processing device 100 may facilitate solving the combinatorial optimization problem accurately even when the depth p of the quantum circuit 130 is relatively small.

Here, a case where a function as the information processing device 100 is implemented by a single computer has been described, but this is not restrictive. For example, the function as the information processing device 100 may be implemented by cooperation of a plurality of computers in some cases. For example, there may be a case where the function as the information processing device 100 is implemented on a cloud.

Here, a case where the information processing device 100 includes the Ising machine has been described, but this is not restrictive. For example, there may be a case where the information processing device 100 acquires the first solution 121 by controlling another computer including the Ising machine so as to calculate the first solution 121 to the combinatorial optimization problem.

Here, a case where the information processing device 100 includes the QPU has been described, but this is not restrictive. For example, there may be a case where the information processing device 100 acquires the first solution 121 by controlling another computer including the QPU so as to calculate the first solution 121 to the combinatorial optimization problem. In addition, for example, there may be a case where the information processing device 100 acquires the second solution 122 by controlling another computer including the QPU so as to calculate the second solution 122 to the combinatorial optimization problem.

(Example of Information Processing System 200)

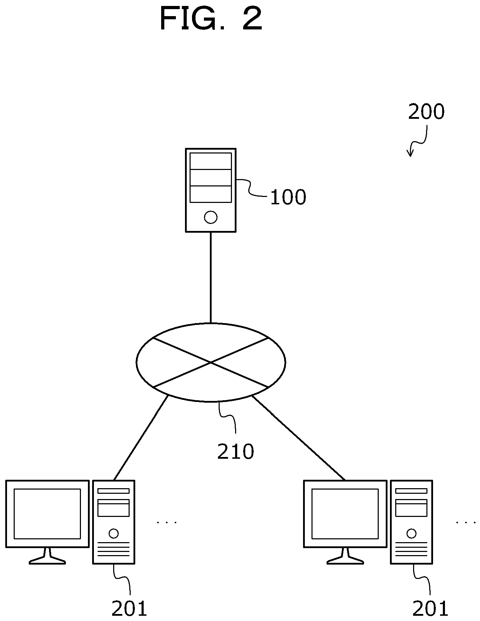

Next, an example of an information processing system 200 to which the information processing device 100 illustrated in FIG. 1 is applied will be described with reference to FIG. 2.

FIG. 2 is an explanatory diagram illustrating an example of the information processing system 200. In FIG. 2, the information processing system 200 includes the information processing device 100 and client devices 201.

In the information processing system 200, the information processing device 100 and the client devices 201 are coupled via a wired or wireless network 210. For example, the network 210 is a local area network (LAN), a wide area network (WAN), the Internet, or the like.

The information processing device 100 is a computer for solving a combinatorial optimization problem. (2-1) The information processing device 100 receives, for example, information indicating a combinatorial optimization problem from the client device 201. For example, the information processing device 100 specifies the combinatorial optimization problem, based on the received information. For example, the information processing device 100 specifies a quantum circuit of a QAOA corresponding to the specified combinatorial optimization problem. For example, the information processing device 100 sets an initial value of an Ising model corresponding to the combinatorial optimization problem.

(2-2) The information processing device 100 determines the first value of a parameter of the specified quantum circuit such that the energy corresponding to the quantum state of the specified quantum circuit is locally minimized. For example, the information processing device 100 calculates the first solution to the combinatorial optimization problem, based on the set initial value and the Ising model corresponding to the combinatorial optimization problem. For example, the information processing device 100 determines the second value of the parameter of the specified quantum circuit from the determined first value of the parameter of the quantum circuit such that the probability that the quantum state of the specified quantum circuit matches the calculated first solution is maximized. For example, the information processing device 100 calculates the second solution to the combinatorial optimization problem, based on the quantum circuit in which the determined second value of the parameter is set.

(2-3) For example, the information processing device 100 sets the calculated second solution as a new initial value of the Ising model and repeatedly performs the series of processes indicated by (2-2) until a convergence condition is satisfied. The convergence condition is, for example, that the series of processes is performed a predetermined number of times. In a case where the convergence condition is satisfied, the information processing device 100 sets the last calculated second solution as the solution to the combinatorial optimization problem. The information processing device 100 transmits the solution to the combinatorial optimization problem to the client device 201. The information processing device 100 is a server, a PC, or the like, for example.

The client device 201 is a computer used by an operator who wants to solve a combinatorial optimization problem. For example, the client device 201 generates information indicating a combinatorial optimization problem, based on an operation input from the operator, and transmits the generated information to the information processing device 100. The information indicating the combinatorial optimization problem includes, for example, an objective function of the combinatorial optimization problem. The information indicating the combinatorial optimization problem may include a constraint condition or the like of the combinatorial optimization problem, for example. The client device 201 receives the solution to the combinatorial optimization problem from the information processing device 100. The client device 201 outputs the solution to the combinatorial optimization problem such that the operator is allowed to refer to the solution. The client device 201 is a PC, a tablet terminal, a smartphone, or the like, for example.

Here, a case where the information processing device 100 is a computer different from the client device 201 has been described, but this is not restrictive. For example, there may be a case where the information processing device 100 has a function as the client device 201 and also operates as the client device 201.

(Exemplary Hardware Configuration of Information Processing Device 100)

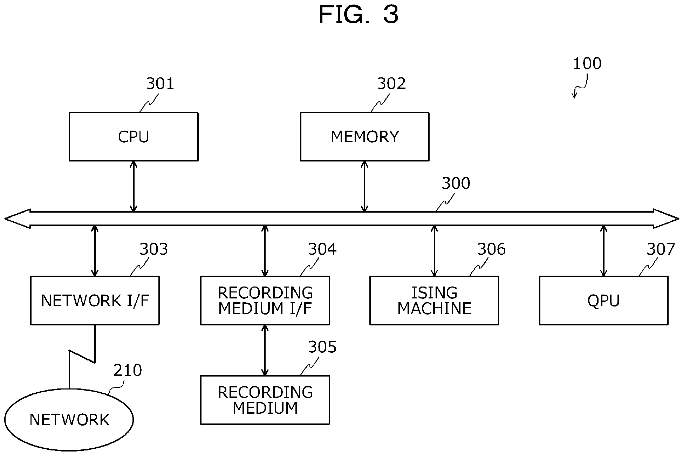

Next, an exemplary hardware configuration of the information processing device 100 will be described with reference to FIG. 3.

FIG. 3 is a block diagram illustrating an exemplary hardware configuration of the information processing device 100. In FIG. 3, the information processing device 100 includes a central processing unit (CPU) 301, a memory 302, a network Interface (I/F) 303, a recording medium I/F 304, and a recording medium 305. In addition, the information processing device 100 includes an Ising machine 306 and a QPU 307. Furthermore, the components are intercoupled to each other by a bus 300.

Here, the CPU 301 takes overall control of the information processing device 100. The memory 302 includes a read only memory (ROM), a random access memory (RAM), a flash ROM, and the like, for example. Specifically, for example, the flash ROM or the ROM stores various programs, and the RAM is used as a work area for the CPU 301. The programs stored in the memory 302 are loaded into the CPU 301 to cause the CPU 301 to execute a coded process.

The network I/F 303 is coupled to the network 210 through a communication line and is coupled to another computer via the network 210. Then, the network I/F 303 takes control of an interface between the network 210 and the inside and controls input and output of data from and to another computer. For example, the network I/F 303 is a modem, a LAN adapter, or the like.

The recording medium I/F 304 controls reading and writing of data from and to the recording medium 305 under the control of the CPU 301. For example, the recording medium I/F 304 is a disk drive, a solid state drive (SSD), a universal serial bus (USB) port, or the like. The recording medium 305 is a nonvolatile memory that stores data written under the control of the recording medium I/F 304. For example, the recording medium 305 is a disk, a semiconductor memory, a USB memory, or the like. The recording medium 305 may be attachable to and detachable from the information processing device 100.

The Ising machine 306 is a computing device, which includes an Ising model and may solve a combinatorial optimization problem by executing, for example, the Digital Annealer™, using the Ising model. The QPU 307 is a computing device that executes quantum computation designated in a quantum circuit. The QPU 307 solves the combinatorial optimization problem, for example, by executing the QAOA.

The information processing device 100 may include a keyboard, a mouse, a display, a printer, a scanner, a microphone, a speaker, and the like, for example, as well as the components described above. In addition, the information processing device 100 may include a plurality of the recording medium I/Fs 304 and a plurality of the recording media 305. Furthermore, the information processing device 100 does not have to include the recording medium I/F 304 or the recording medium 305.

(Exemplary Hardware Configuration of Client Device 201)

Since an exemplary hardware configuration of the client device 201 is specifically similar to the exemplary hardware configuration of the information processing device 100 illustrated in FIG. 3, description thereof will be omitted. The client device 201 does not have to include the QPU 307.

(Exemplary Functional Configuration of Information Processing Device 100)

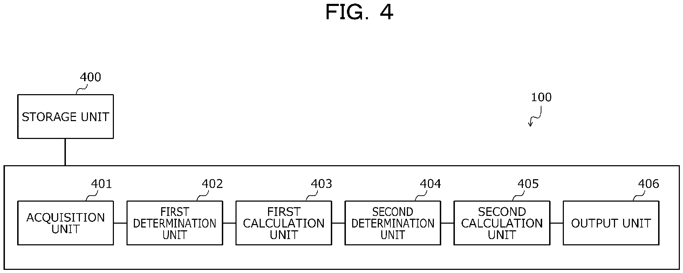

Next, an exemplary functional configuration of the information processing device 100 will be described with reference to FIG. 4.

FIG. 4 is a block diagram illustrating an exemplary functional configuration of the information processing device 100. The information processing device 100 includes a storage unit 400, an acquisition unit 401, a first determination unit 402, a first calculation unit 403, a second determination unit 404, a second calculation unit 405, and an output unit 406.

The storage unit 400 is implemented by, for example, a storage area such as the memory 302 or the recording medium 305 illustrated in FIG. 3. Hereinafter, a case where the storage unit 400 is included in the information processing device 100 will be described, but this is not restrictive. For example, there may be a case where the storage unit 400 is included in a device different from the information processing device 100, and the information processing device 100 is allowed to refer to the storage contents of the storage unit 400.

The acquisition unit 401 to the output unit 406 function as an example of a control unit. Specifically, for example, the acquisition unit 401 to the output unit 406 implement its functions by causing the CPU 301 to execute a program stored in a storage area such as the memory 302 or the recording medium 305 or by the network I/F 303 illustrated in FIG. 3. A processing result of each functional unit is stored in, for example, a storage area such as the memory 302 or the recording medium 305 illustrated in FIG. 3.

The storage unit 400 stores various types of information to be referred to or updated in processing of each functional unit. The storage unit 400 stores, for example, information indicating a combinatorial optimization problem. The information indicating the combinatorial optimization problem includes, for example, an objective function of the combinatorial optimization problem. The information indicating the combinatorial optimization problem may include a constraint condition or the like of the combinatorial optimization problem, for example. The information indicating the combinatorial optimization problem is acquired by, for example, the acquisition unit 401. The information indicating the combinatorial optimization problem may be preset by the user, for example.

The storage unit 400 stores, for example, an Ising model corresponding to the combinatorial optimization problem. The Ising model is acquired by, for example, the acquisition unit 401. The Ising model may be preset by the user, for example. The storage unit 400 stores, for example, an initial value of the Ising model. The initial value corresponds to a candidate for a solution to the combinatorial optimization problem. The initial value is acquired by, for example, the acquisition unit 401. The initial value may be preset by the user, for example.

The storage unit 400 stores, for example, a QAOA quantum circuit corresponding to the combinatorial optimization problem. The QAOA quantum circuit represents a procedure of quantum computation. The QAOA quantum circuit has a function of outputting a quantum state corresponding to a solution to the combinatorial optimization problem. The QAOA quantum circuit is acquired by, for example, the acquisition unit 401. The QAOA quantum circuit may be preset by the user, for example.

The acquisition unit 401 acquires various types of information to be used for processing of each functional unit. The acquisition unit 401 stores various types of the acquired information in the storage unit 400 or outputs various types of the acquired information to each functional unit. In addition, the acquisition unit 401 may output various types of information previously stored in the storage unit 400 to each functional unit. The acquisition unit 401 acquires various types of information, based on, for example, operation input from the user. The acquisition unit 401 may receive various types of information from, for example, a device different from the information processing device 100.

The acquisition unit 401 acquires, for example, a processing request for instructing to solve a combinatorial optimization problem. The processing request may include information indicating the combinatorial optimization problem, an Ising model, an initial value of the Ising model, and a QAOA quantum circuit. Specifically, the acquisition unit 401 acquires the processing request by accepting an input of the processing request, based on an operation input from the user. Specifically, the acquisition unit 401 may receive the processing request from another computer. Examples of the another computer include the client device 201.

The acquisition unit 401 acquires, for example, information indicating a combinatorial optimization problem. Specifically, the acquisition unit 401 acquires the information indicating the combinatorial optimization problem by accepting an input of the information indicating the combinatorial optimization problem, based on an operation input from the user. Specifically, the acquisition unit 401 may receive the information indicating the combinatorial optimization problem from another computer. Specifically, the another computer is the client device 201. Specifically, the acquisition unit 401 may acquire the information indicating combinatorial optimization problem by extracting the information indicating the combinatorial optimization problem from the processing request.

The acquisition unit 401 acquires, for example, the Ising model. Specifically, the acquisition unit 401 acquires the Ising model by accepting an input of the Ising model, based on an operation input from the user. Specifically, the acquisition unit 401 may receive the Ising model from another computer. Examples of the another computer include the client device 201. Specifically, the acquisition unit 401 may acquire the Ising model by extracting the Ising model from the processing request.

The acquisition unit 401 acquires, for example, the initial value of the Ising model. Specifically, the acquisition unit 401 acquires the initial value of the Ising model by accepting an input of the initial value of the Ising model, based on an operation input from the user. Specifically, the acquisition unit 401 may receive the initial value of the Ising model from another computer. Examples of the another computer include the client device 201. Specifically, the acquisition unit 401 may acquire the initial value of the Ising model by extracting the initial value of the Ising model from the processing request.

The acquisition unit 401 acquires, for example, the QAOA quantum circuit. Specifically, the acquisition unit 401 acquires the QAOA quantum circuit by accepting an input of the QAOA quantum circuit, based on an operation input from the user. Specifically, the acquisition unit 401 may receive the QAOA quantum circuit from another computer. Examples of the another computer include the client device 201. Specifically, the acquisition unit 401 may acquire the QAOA quantum circuit by extracting the QAOA quantum circuit from the processing request.

The acquisition unit 401 may accept a start trigger to start processing of any one of the functional units. The start trigger is, for example, a predetermined operation input made by the user. The start trigger may be, for example, reception of predetermined information from another computer. The start trigger may be, for example, output of predetermined information by any one of the functional units. For example, the acquisition unit 401 accepts acquisition of the processing request as a start trigger for starting processing of the first determination unit 402, the first calculation unit 403, the second determination unit 404, and the second calculation unit 405.

The first determination unit 402 determines the first value of the parameter of the QAOA such that the energy corresponding to the quantum state of the QAOA quantum circuit is locally minimized. For example, in response to the acquisition of the processing request by the acquisition unit 401, the first determination unit 402 determines the first value of the parameter of the QAOA such that the energy corresponding to the quantum state of the QAOA quantum circuit is locally minimized. This may allow the first determination unit 402 to appropriately determine the parameter of the QAOA and to approximate the QAOA quantum circuit to an eigenvalue problem.

For example, every time the second calculation unit 405 calculates the second solution, the first determination unit 402 newly determines the first value of the parameter of the QAOA such that the energy corresponding to the quantum state of the QAOA quantum circuit is locally minimized. This may allow the first determination unit 402 to appropriately determine the parameter of the QAOA and to approximate the QAOA quantum circuit to an eigenvalue problem. The first determination unit 402 corresponds to the QPU 307.

The first calculation unit 403 calculates the first solution to the combinatorial optimization problem, based on the Ising model. For example, in response to the acquisition of the processing request by the acquisition unit 401, the first calculation unit 403 calculates the first solution to the combinatorial optimization problem, based on the set initial value and the Ising model. This may allow the first calculation unit 403 to obtain a guideline for determining the parameter of the QAOA and to facilitate the determination of the parameter of the QAOA.

For example, every time the second calculation unit 405 calculates the second solution, the first calculation unit 403 sets the calculated second solution as an initial value. For example, every time the second calculation unit 405 calculates the second solution, the first calculation unit 403 newly calculates the first solution to the combinatorial optimization problem, based on the set initial value and the Ising model. This may allow the first calculation unit 403 to obtain a guideline for determining the parameter of the QAOA and to facilitate the determination of the parameter of the QAOA. The first calculation unit 403 corresponds to, for example, the Ising machine 306.

The second determination unit 404 determines the second value of the parameter of the QAOA from the first value of the parameter of the QAOA such that the probability that the quantum state of the QAOA quantum circuit matches the first solution calculated by the first calculation unit 403 is maximized. For example, every time the first calculation unit 403 calculates the first solution, the second determination unit 404 determines the second value of the parameter of the QAOA from the first value of the parameter of the QAOA such that the probability that the quantum state of the QAOA quantum circuit matches the calculated first solution is maximized. This may allow the second determination unit 404 to appropriately determine the parameter of the QAOA and to facilitate the calculation of the second solution to the combinatorial optimization problem, based on the QAOA quantum circuit. The second determination unit 404 corresponds to the QPU 307.

The second calculation unit 405 calculates the second solution to the combinatorial optimization problem, based on the QAOA quantum circuit in which the second value of the parameter determined by the second determination unit 404 is set. For example, every time the second determination unit 404 determines the second value of the parameter, the second calculation unit 405 sets the determined second value of the parameter in the QAOA quantum circuit. The second calculation unit 405 calculates the second solution to the combinatorial optimization problem, based on, for example, the QAOA quantum circuit in which the second value of the parameter is set. This may allow the second calculation unit 405 to calculate an appropriate solution to the combinatorial optimization problem. The second calculation unit 405 corresponds to the QPU 307.

The information processing device 100 repeatedly executes a series of processes of the first determination unit 402, the first calculation unit 403, the second determination unit 404, and the second calculation unit 405 until a predetermined condition is satisfied. The predetermined condition is, for example, that the series of processes is calculated a predetermined number of times. This may allow the information processing device 100 to bring the second solution calculated by the second calculation unit 405 closer to an optimal solution to the combinatorial optimization problem.

The output unit 406 outputs a processing result of at least any one of the functional units. Examples of an output format include display on a display, print output to a printer, transmission to an external device by the network I/F 303, or

EP 4 621 665 A1

storage in a storage area such as the memory 302 or the recording medium 305. This may allow the output unit 406 to make it possible to notify the user of a processing result of at least any one of the functional units and to promote improvement in convenience of the information processing device 100.

The output unit 406 outputs the second solution calculated by the second calculation unit 405. The output unit 406 outputs, for example, the second solution last calculated by the second calculation unit 405. Specifically, the output unit 406 outputs the second solution last calculated by the second calculation unit 405 such that the user is allowed to refer to the second solution. Specifically, the output unit 406 may transmit the second solution last calculated by the second calculation unit 405 to another computer. This allows the output unit 406 to make the solution to the combinatorial optimization problem available outside.

Here, a case where the information processing device 100 includes the first calculation unit 403 and the second calculation unit 405 has been described, but this is not restrictive. For example, there may be a case where the information processing device 100 uses the first calculation unit 403 by communicating with another computer including the first calculation unit 403. For example, there may be a case where the information processing device 100 uses the second calculation unit 405 by communicating with another computer including the second calculation unit 405.

(Examples of Operations of Information Processing Device 100)

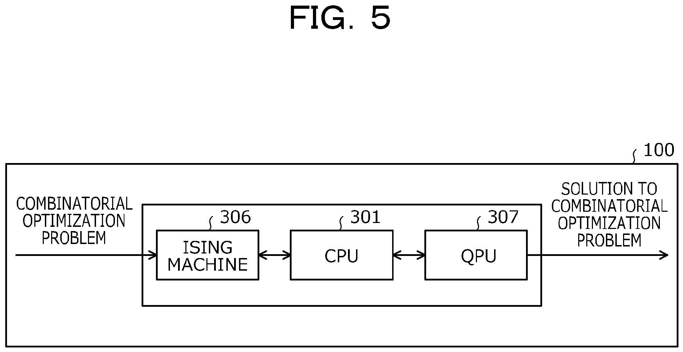

Next, examples of operations of the information processing device 100 will be described with reference to FIGs. 5 to 9.

FIGs. 5 to 9 are explanatory diagrams illustrating examples of operations of the information processing device 100. In FIG. 5, the information processing device 100 acquires information indicating a combinatorial optimization problem min (E = C(z)). Energy is denoted by E. E = C(z) is an objective function to be minimized. A state is denoted by z. The information processing device 100 specifies the combinatorial optimization problem min (E = C(z)), based on the information indicating the combinatorial optimization problem.

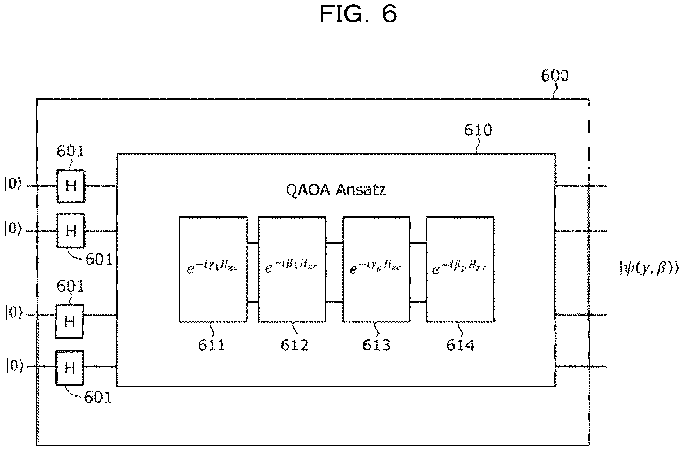

The information processing device 100 has an initial value for the Ising model. The initial value is, for example, a value of the state z. The information processing device 100 sets a QAOA quantum circuit 600 corresponding to the combinatorial optimization problem. Here, description of FIG. 6 will be made, and an example of the QAOA quantum circuit 600 will be described.

FIG. 6 illustrates an example of the QAOA quantum circuit 600. In FIG. 6, the QAOA quantum circuit 600 includes Hadamard gates 601 representing computation for a state of each qubit of the n qubits, and a QAOA Ansatz 610 representing computation for a state of the n qubits. The number of qubits is denoted by n.

The QAOA Ansatz 610 includes gates 611 to 614. The gates 611 and 613 represent, for example, a phase separation operator. The gates 612 and 614 represent, for example, a mixing operator. The QAOA Ansatz 610 is defined by a hyperparameter $(\gamma, \beta)$. The hyperparameter $(\gamma, \beta)$ denotes, for example, p instances of $(\gamma_i, \beta_i)$. In the example in FIG. 6, a level p of the QAOA Ansatz 610 has two. The depth corresponds to p.

Returning to the description of FIG. 5, (5-1) the information processing device 100 determines a hyperparameter $(\gamma', \beta')$ with the CPU 301 and the QPU 307 such that the energy of the quantum state $|\psi(\gamma, 6)>$ of the QAOA quantum circuit 600 is locally minimized. This may allow the information processing device 100 to determine the hyperparameter $(\gamma', \beta')$ such that the QAOA Ansatz 610 is approximated to the combinatorial optimization problem.

(5-1-1) Specifically, the information processing device 100 applies a superposition state $|s>$ to the n qubits with the QPU 307. The superposition state $|s>$ is defined by, for example, following Formula (1).
[Mathematical Formula 1]

$$|s\rangle = |+\rangle^{\otimes n} \quad ...(1)$$

(5-1-2) The information processing device 100 multiplies the n qubits by $U_c(\gamma_1)U_x(\beta_1) ... U_c(\gamma_p)U_x(\beta_p)$ according to the p instances of $(\gamma_i, \beta_i)$ with the QPU 307, thereby specifying the quantum state $|\psi(\gamma, \beta)>$. In the above, i = 1, 2, ..., p holds.

(5-1-3) The information processing device 100 measures the energy $E(\gamma, \beta) = <\psi(\gamma, \beta) | C(z) | \psi(\gamma, \beta)>$ with the QPU 307. The information processing device 100 determines the hyperparameter $(\gamma', \beta')$ with the CPU 301 such that the measured energy $E(\gamma, \beta)$ is locally minimized. The information processing device 100 sets an objective function that locally minimizes the energy $E(\gamma, \beta)$, using, for example, the Grid method, the BFGS method, the quadratic approximation method, the Powell method, the Bayesian estimation, or the like, and calculates the hyperparameter $(\gamma', \beta')$.

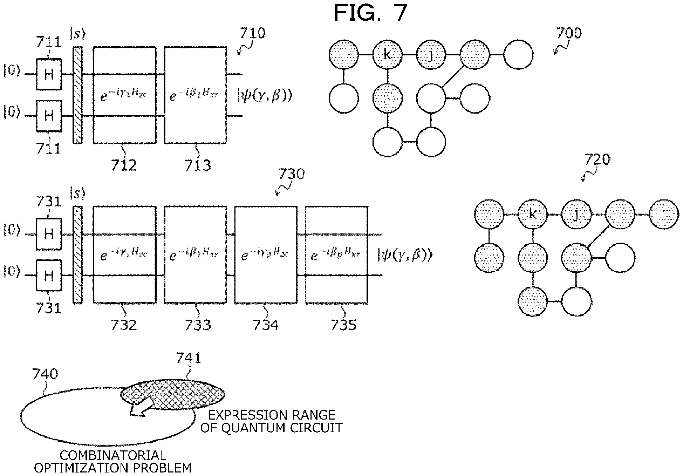

(5-1-4) The information processing device 100 repeatedly determines the hyperparameter $(\gamma', \beta')$ with the CPU 301. The information processing device 100 continues to return to the process in (5-1-1) until the CPU 301 determines the hyperparameter $(\gamma', \beta')$ a predetermined number of times. When the CPU 301 has determined the hyperparameter $(\gamma', \beta')$ the predetermined number of times, the information processing device 100 statistically determines the hyperparameter $(\gamma', \beta')$. The predetermined number of times is preset, for example. The predetermined number of times is, for example, a first number. Here, description of FIG. 7 will be made, and the reason why the QAOA Ansatz 610 is approximated to the combinatorial optimization problem will be described.

A graph 700 in FIG. 7 represents the MaxCut problem. Nodes in the graph 700 correspond to qubits. Among the nodes of the graph 700, the dotted hatched nodes represent the range expressed by a QAOA Ansatz 710 with p = 1. The QAOA Ansatz 710 includes Hadamard gates 711. The QAOA Ansatz 710 includes, for example, gates 712 and 713. Here, the energy is defined by, for example, following Formula (2). As indicated by following Formula (2), U indicated by following Formula (3) cancels other qubits different from the qubits with suffixes j and k.

[Mathematical Formula 2]

$$E = \langle \psi(\gamma, \beta) | C_Z | \psi(\gamma, \beta) \rangle = \sum_{\langle j,k \rangle \in Z} \langle s | e^{\gamma_1 H_{ZC}} e^{\beta_1 H_{xr}} C_{\langle j,k \rangle} e^{-\beta_1 H_{xr}} e^{-\gamma_1 H_{ZC}} | s \rangle$$

$$= \sum_{\langle j,k \rangle \in Z} \langle s | e^{\gamma_1 H_{ZC}} e^{\beta_1 \left( \sigma_x^j + \sigma_x^k \right)} C_{\langle j,k \rangle} e^{-\beta_1 \left( \sigma_x^j + \sigma_x^k \right)} e^{-\gamma_1 H_{ZC}} | s \rangle \quad \dots (2)$$

[Mathematical Formula 3]

$$U = e^{-\gamma_1 H_{ZC}} \quad \dots (3)$$

Accordingly, the QAOA Ansatz 710 with p = 1 has a disadvantage that the entire graph 700 may not be expressed. Similarly, a graph 720 represents the MaxCut problem. Nodes in the graph 720 correspond to qubits. Among the nodes of the graph 720, the dotted hatched nodes represent the range expressed by a QAOA Ansatz 730 with p = 2. The QAOA Ansatz 730 includes Hadamard gates 731. The QAOA Ansatz 730 includes gates 732 to 735. The QAOA Ansatz 730 with p = 2 has a disadvantage that the entire graph 720 may not be expressed, similarly to the QAOA Ansatz 710 with p = 1.

Therefore, the information processing device 100 preferably determines the hyperparameter $(\gamma', \beta')$ such that an expression range 741 of the QAOA Ansatz 610 is approximated to a combinatorial optimization problem 740. For approximating the expression range 741 of the QAOA Ansatz 610 to the combinatorial optimization problem 740, specifically, above-mentioned Reference Document 7 can be referred to.

Returning to the description of FIG. 5, (5-2) the information processing device 100 calculates the state $z_0$ relevant to a solution to C(z), with the Ising machine 306, based on the Ising model and the initial value. For example, the information processing device 100 may use the Digital Annealer ™ to calculate the state $z_0$ relevant to a solution to C(z), with the Ising machine 306, based on the Ising model and the initial value.

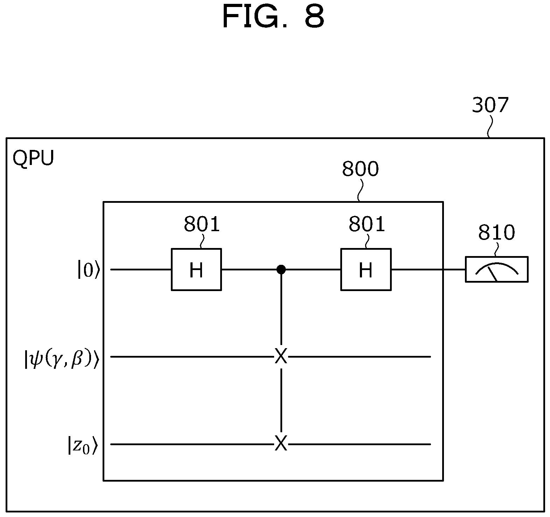

(5-3) The information processing device 100 determines a hyperparameter $(\gamma^*, \beta^*)$ with the CPU 301 and the QPU 307. For example, the information processing device 100 determines the hyperparameter $(\gamma^*, \beta^*)$ from the hyperparameter $(\gamma', \beta')$ such that the probability that the quantum state $| \psi(\gamma, 6) \rangle$ of the QAOA quantum circuit 600 matches $z_0$ is maximized. Here, description of FIG. 8 will be made, and an example in which the information processing device 100 determines the hyperparameter $(\gamma^*, \beta^*)$ will be described.

FIG. 8 illustrates an example of determining the hyperparameter $(\gamma^*, \beta^*)$. In FIG. 8, the information processing device 100 sets the hyperparameter $(\gamma', \beta')$ as the hyperparameter $(\gamma, \beta)$. (8-1) The information processing device 100 applies the superposition state $| s \rangle$ to the n qubits with the QPU 307. The superposition state $| s \rangle$ is defined by, for example, above Formula (1).

(8-2) The information processing device 100 multiplies the n qubits by $U_c(\gamma_1) U_x(\beta_1) \dots U_c(\gamma_p) U_x(\beta_p)$ according to the p instances of $(\gamma_i, \beta_i)$ with the QPU 307, thereby specifying the quantum state $| \psi(\gamma, \beta) \rangle$. In the above, i = 1, 2, ..., p holds.

(8-3) The information processing device 100 measures a probability $p_{z0}(\gamma, \beta) = \langle \psi(\gamma, \beta) | z_0 \rangle \langle z_0 | \psi(\gamma, \beta) \rangle = \langle \psi(\gamma, \beta) | z_0 \rangle^2$ by performing a swap test with the QPU 307. For example, the information processing device 100 measures the probability $p_{z0}(\gamma, \beta) = \langle \psi(\gamma, \beta) | z_0 \rangle \langle z_0 | \psi(\gamma, \beta) \rangle$ in accordance with a quantum circuit 800 for the swap test illustrated in FIG. 8. The quantum circuit 800 for the swap test includes Hadamard gates 801, which enable measurement of $p_{z0}(\gamma, \beta) = \langle \psi(\gamma, \beta) | z_0 \rangle \langle z_0 | \psi(\gamma, \beta) \rangle$ at a measurement point 810.

Specifically, the information processing device 100 measures the probability $p_{z0}(\gamma, \beta)$, based on the result of n-shot sampling conducted on the quantum state of the measurement point 810, in accordance with the quantum circuit 800 for the swap test illustrated in FIG. 8. More specifically, with n = 1000, if the number of times the quantum state of the measurement point 810 is measured to be 0 = 10 holds, the information processing device 100 obtains the probability $p_{z0}(\gamma, \beta) = 10/1000$.

(8-4) The information processing device 100 determines the hyperparameter $(\gamma^*, \beta^*)$ with the CPU 301 such that the measured probability $p_{z0}(\gamma, \beta)$ is maximized. The information processing device 100 sets an objective function that maximizes the probability $p_{z0}(\gamma, \beta)$, using, for example, the Grid method, the BFGS method, the quadratic approximation method, the Powell method, the Bayesian estimation, or the like, and calculates the hyperparameter ($\gamma$*, B*).

(8-5) The information processing device 100 repeatedly determines the hyperparameter ($\gamma$*, $\beta$*) with the CPU 301 as described above. The information processing device 100 continues to set the last calculated hyperparameter ($\gamma$*, $\beta$*) as the hyperparameter ($\gamma$, $\beta$) and return to the process in (8-1) until the CPU 301 determines the hyperparameter ($\gamma$*, $\beta$*) a predetermined number of times. When the CPU 301 has determined the hyperparameter ($\gamma$*, $\beta$*) the predetermined number of times, the information processing device 100 statistically determines the hyperparameter ($\gamma$*, $\beta$*). The predetermined number of times is preset, for example. The predetermined number of times is, for example, a second number.

Returning to the description of FIG. 5, (5-4) the information processing device 100 conducts n-shot sampling on the quantum state $|\psi(\gamma^*, \beta^*)>$ with the CPU 301 and the QPU 307 in accordance with the QAOA quantum circuit 600, based on ($\gamma$*, $\beta$*), and determines an optimal classical state $z_1$*. Here, an example of determining the optimal classical state $z_1$* will be described with reference to FIG. 6 again.

In FIG. 6, the information processing device 100 applies the superposition state $|s>$ to the n qubits with the QPU 307. The information processing device 100 multiplies the n qubits by $U_c(\gamma_1)U_x(\beta_1) ... U_c(\gamma_p)U_x(\beta_p)$ according to ($\gamma$*, $\beta$*) with the QPU 307, thereby specifying the quantum state $|\psi(\gamma^*, \beta^*)>$.

The information processing device 100 conducts n-shot sampling on the quantum state $|\psi(\gamma^*, \beta^*)>$ with the QPU 307 and determines n classical states $z_1$. For example, the information processing device 100 repeatedly performs Z-direction projection measurement on the quantum state $|\psi(\gamma^*, \beta^*)>$ represented by the QAOA quantum circuit 600 in which ($\gamma$*, $\beta$*) is set, with the QPU 307 n times to obtain the state z, and determines n classical states $z_1$.

The information processing device 100 determines the classical state $z_1$* that is a provisional solution to the combinatorial optimization problem, with the CPU 301, based on the n classical states $z_1$. The information processing device 100 verifies, for example, with the CPU 301, whether or not $\min(E_1) < \min(E_0, E_1^*)$ holds. Here, for example, in a case where $\min(E_1) < \min(E_0, E_1^*)$ holds, the information processing device 100 determines $z_1$* as $\operatorname{argmin}(E_1)$ with the CPU 301. On the other hand, for example, in a case where $\min(E_1) < \min(E_0, E_1^*)$ does not hold, the information processing device 100 determines $z_1$* with the CPU 301, based on $E_1$ and the Hamming distance.

Returning to the description of FIG. 5, (5-5) the information processing device 100 verifies, with the CPU 301, whether or not an end condition is satisfied. The end condition is, for example, that a series of processes of (5-1), (5-2), (5-3), and (5-4) is performed a predetermined number of times. The predetermined number of times is preset, for example. The predetermined number of times is, for example, a third number. The third number may be the same as the second number. The end condition may be designated by, for example, a threshold value for the energy E or the state z.

If the end condition is not satisfied, the information processing device 100 sets the optimal classical state $z_1$* determined this time as the initial value of the Ising machine 306 with the CPU 301 and performs the series of processes of (5-1), (5-2), (5-3), and (5-4) again.

If the end condition is satisfied, the information processing device 100 outputs $\min(C(z_0), C(z_1^*))$ and arg-$\min(C(z))$. In the above, $\operatorname{argmin}(C(z))$ has, for example, $z_0$ or $z_1$*. This may allow the information processing device 100 to accurately calculate $\operatorname{argmin}(C(z))$ that is a solution to the combinatorial optimization problem. The information processing device 100 may promote reduction of the expected time taken to calculate the solution to the combinatorial optimization problem. Next, description of FIG. 8 will be made, and effects of the information processing device 100 will be described.

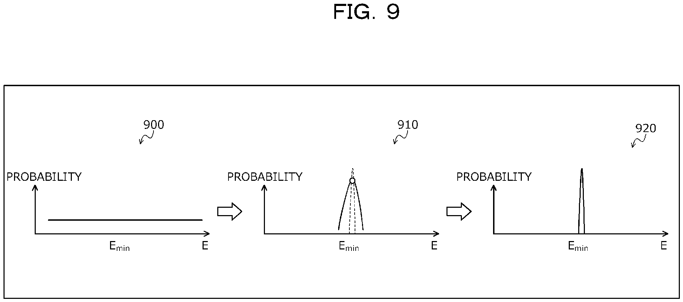

FIG. 9 illustrates an effect of the information processing device 100. A graph 900 in FIG. 9 represents distribution of probabilities that a quantum state represents the classical state z taking each value of the energy E initially. As illustrated in the graph 900 in FIG. 9, the distribution of the probabilities that a quantum state represents the classical state z taking each value of the energy E initially is uniform.

In these circumstances, the information processing device 100 determines the hyperparameter ($\gamma$, $\beta$) for the combinatorial optimization problem, according to the calculation result of the Ising machine 306 prior to the QAOA such that the probability that a quantum state represents the classical state z taking a value around $E_{min}$ becomes higher. A graph 910 in FIG. 9 represents distribution of probabilities that a quantum state represents the classical state z taking each value of the energy E after the hyperparameter ($\gamma$, $\beta$) is determined. As illustrated in the graph 910 in FIG. 9, the probability that a quantum state represents the classical state z taking a value around $E_{min}$ has become higher. This may allow the information processing device 100 to improve the efficiency of searching for an optimal solution, with the QAOA.

Then, after making the probability that a quantum state represents the classical state z taking a value around $E_{min}$ higher, the information processing device 100 calculates a solution to the combinatorial optimization problem with the QAOA. A graph 920 in FIG. 9 represents distribution of probabilities that a quantum state represents the classical state z taking each value of the energy E when a solution to the combinatorial optimization problem is calculated with the QAOA. As illustrated in the graph 920 in FIG. 9, the probability that a quantum state represents the classical state z taking a value in a narrow range closer to $E_{min}$ in the vicinity of $E_{min}$ has become higher.

This may allow the information processing device 100 to efficiently and accurately bring the solution to the combinatorial optimization problem closer to the optimal solution with the QAOA. For example, the information processing device 100 may consider all the states represented by the quantum states that can be a solution to the combinatorial optimization problem, with the QAOA, and may accurately calculate the solution to the combinatorial optimization problem. Accordingly, the information processing device 100 may promote reduction of the expected time taken to calculate the solution to the combinatorial optimization problem, with the QAOA.

In addition, the information processing device 100 can determine the hyperparameter $(\gamma', \beta')$ such that the expression range of the QAOA Ansatz 610 is approximated to the combinatorial optimization problem. Therefore, even if the depth p of the QAOA Ansatz 610 is relatively small, the information processing device 100 may ensure that the QAOA Ansatz 610 expresses the whole aspect of the combinatorial optimization problem and may facilitate solving the combinatorial optimization problem accurately.

Here, a case where the information processing device 100 determines the hyperparameter $(\gamma^*, \beta^*)$ and determines the optimal classical state $z_1^*$, using the QPU 307 has been described, but this is not restrictive. For example, there may be a case where the information processing device 100 includes a simulator of a quantum computer. Specifically, the information processing device 100 uses a simulator of a quantum computer to determine the hyperparameters $(\gamma^*, \beta^*)$ and determine the optimal classical state $z_1^*$.

(Application Examples of Information Processing Device 100)

Next, application examples of the information processing device 100 will be described. The information processing device 100 can be applied, for example, to a case of solving a combinatorial optimization problem for searching for a movement route of a mobile body. The information processing device 100 can be applied, for example, to a case of solving a combinatorial optimization problem for creating a work schedule of employees. The information processing device 100 can be applied, for example, to a case of solving a combinatorial optimization problem for creating a product manufacturing plan.

(Overall Processing Procedure)

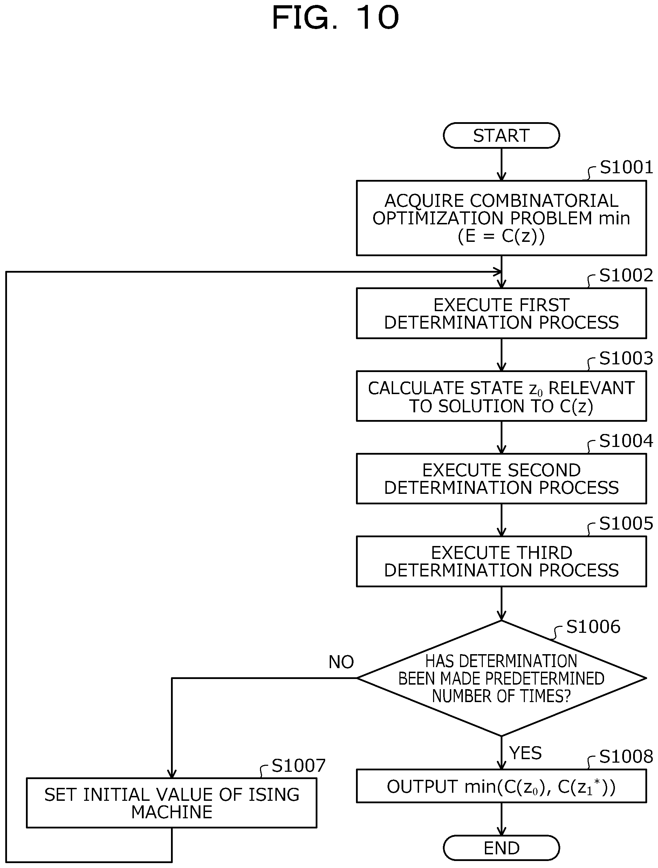

Next, an example of an overall processing procedure executed by the information processing device 100 will be described with reference to FIG. 10. An overall process is implemented by, for example, the CPU 301, a storage area such as the memory 302 or the recording medium 305, the network I/F 303, the Ising machine 306, and the QPU 307 illustrated in FIG. 3.

FIG. 10 is a flowchart illustrating an example of the overall processing procedure. In FIG. 10, the information processing device 100 acquires a combinatorial optimization problem min $(E = C(z))$ with the CPU 301 (step S1001).

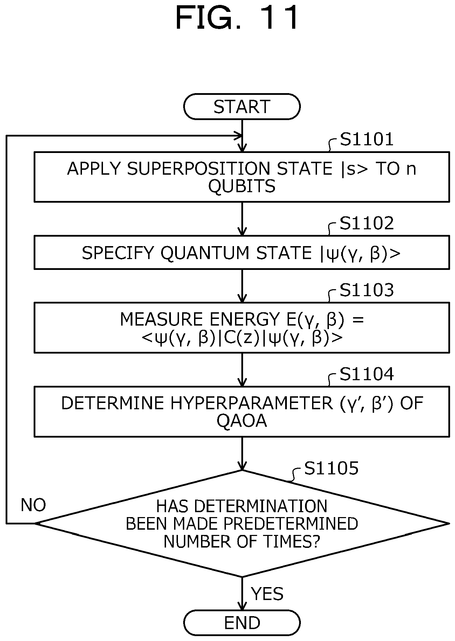

Next, the information processing device 100 executes a first determination process to be described later with reference to FIG. 11, with the QPU 307 (step S1002). By executing the first determination process, the information processing device 100 determines the hyperparameter $(\gamma', \beta')$ of the QAOA such that the energy $E(\gamma, \beta)$ is locally minimized.

Next, the information processing device 100 calculates the state $z_0$ relevant to a solution to $C(z)$, based on an initial value, with the Ising machine 306 (step S 1003).

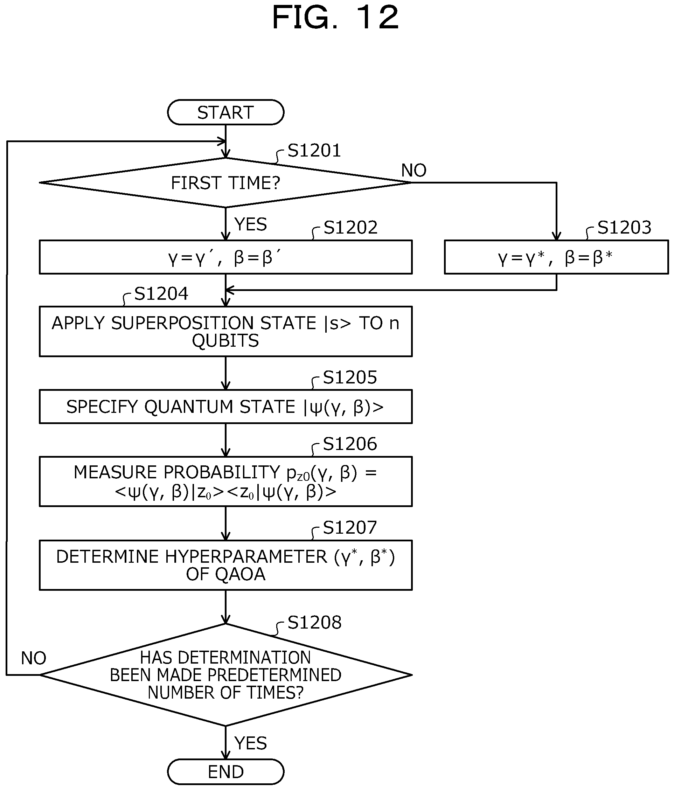

Next, the information processing device 100 executes a second determination process to be described later with reference to FIG. 12, with the QPU 307, based on the hyperparameter $(\gamma', \beta')$ of the QAOA and the state $z_0$ relevant to a solution to $C(z)$ (step S 1004). By executing the second determination process, the information processing device 100 determines the hyperparameter $(\gamma^*, \beta^*)$ of the QAOA from the hyperparameter $(\gamma', \beta')$ of the QAOA such that the probability that the quantum state $|\psi(\gamma, \beta)>$ matches $z_0$ is maximized.

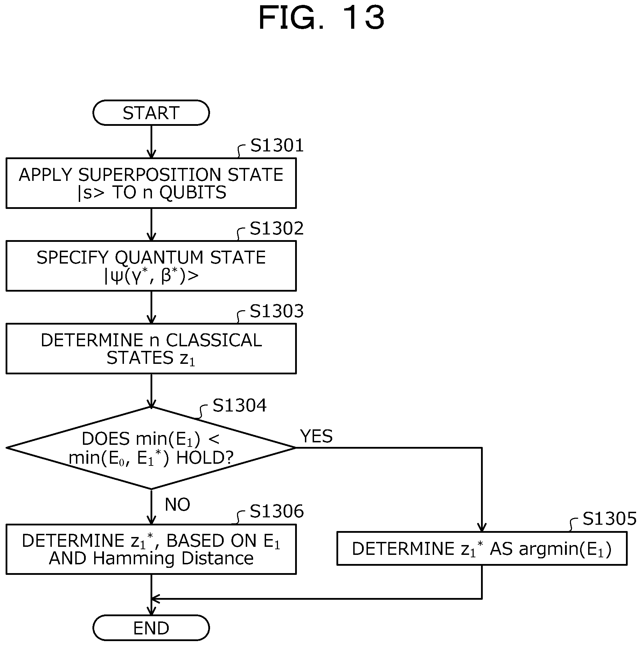

Then, the information processing device 100 executes a third determination process to be described later with reference to FIG. 13, with the QPU 307 (step S1005). By executing the third determination process, the information processing device 100 conducts n-shot sampling on the quantum state $|\psi(\gamma^*, \beta^*)>$ and determines the optimal classical state $z_1^*$.

Next, the information processing device 100 verifies whether or not the optimal classical state $z_1^*$ has been determined a predetermined number of times (step S1006). The predetermined number of times is preset by the user, for example. Here, in a case where determination has not been made the predetermined number of times (step S 1006: No), the information processing device 100 proceeds to the process in step S1007. On the other hand, in a case where determination has been made the predetermined number of times (step S1006: Yes), the information processing device 100 proceeds to the process in step S1008.

In step S 1007, the information processing device 100 sets the initial value of the Ising machine 306 as the optimal classical state $z_1^*$ (step S1007). Then, the information processing device 100 returns to the process in step S 1002.

In step S1008, the information processing device 100 outputs min$(C(z_0), C(z_1^*))$ (step S1008). Here, the information processing device 100 may output argmin$(C(z))$. Then, the information processing device 100 ends the overall process.

(First Determination Processing Procedure)

Next, an example of the first determination processing procedure executed by the information processing device 100 will be described with reference to FIG. 11. The first determination process is implemented by, for example, the CPU 301, a storage area such as the memory 302 or the recording medium 305, the network I/F 303, and the QPU 307 illustrated in FIG. 3.

FIG. 11 is a flowchart illustrating an example of the first determination processing procedure. In FIG. 11, the information processing device 100 applies the superposition state |s> to the n qubits (step S1101). Next, the information processing device 100 multiplies the n qubits by $U_c(\gamma_1)U_x(\beta_1) \dots U_c(\gamma_p)U_x(\beta_p)$ for the p instances of $(\gamma_i, \beta_i)$, thereby specifying the quantum state $|\psi(\gamma, 6)>$ (step S1102).

Next, the information processing device 100 measures the energy $E(\gamma, \beta) = <\psi(\gamma, \beta)|C(z)|\psi(\gamma, \beta)>$ (step S1103). Then, the information processing device 100 determines the hyperparameter $(\gamma', \beta')$ of the QAOA such that the energy $E(\gamma, \beta)$ is locally minimized (step S1104).

Next, the information processing device 100 verifies whether or not the hyperparameter $(\gamma', \beta')$ of the QAOA has been determined a predetermined number of times (step S1105). The predetermined number of times is preset by the user, for example. Here, in a case where determination has not been made the predetermined number of times (step S1105: No), the information processing device 100 returns to the process in step S1101. On the other hand, in a case where determination has been made the predetermined number of times (step S1105: Yes), the information processing device 100 ends the first determination process.

(Second Determination Processing Procedure)

Next, an example of the second determination processing procedure executed by the information processing device 100 will be described with reference to FIG. 12. The second determination process is implemented by, for example, the CPU 301, a storage area such as the memory 302 or the recording medium 305, the network I/F 303, and the QPU 307 illustrated in FIG. 3.

FIG. 12 is a flowchart illustrating an example of the second determination processing procedure. In FIG. 12, the information processing device 100 verifies whether or not the loop is a loop at the first time (step S1201). Here, in a case where the loop is a loop at the first time (step S1201: Yes), the information processing device 100 assigns $\gamma = \gamma'$ and $\beta = \beta'$ (step S1202) and proceeds to the process in step S1204. On the other hand, in a case where the loop is not a loop at the first time (step S 1201: No), the information processing device 100 assigns $\gamma = y^*$ and $\beta = \beta^*$ (step S 1203) and proceeds to the process in step S1204.

In step S 1204, the information processing device 100 applies the superposition state |s> to the n qubits (step S1204). Next, the information processing device 100 multiplies the n qubits by $U_c(\gamma_1)U_x(\beta_1) \dots U_c(\gamma_p)U_x(\beta_p)$ for the p instances of $(\gamma_i, \beta_i)$, thereby specifying the quantum state $|\psi(\gamma, 6)>$ (step S1205).

Next, the information processing device 100 measures the probability $p_{z0}(\gamma, \beta) = <\Psi(\gamma, \beta)|z_0><z_0|\psi(\gamma, \beta)>$ (step S 1206). Then, the information processing device 100 determines the hyperparameter $(\gamma^*, \beta^*)$ of the QAOA such that the probability $p_{z0}(\gamma, \beta)$ is maximized (step S1207).

Next, the information processing device 100 verifies whether or not the hyperparameter $(\gamma^*, \beta^*)$ of the QAOA has been determined a predetermined number of times (step S 1208). The predetermined number of times is preset by the user, for example. Here, in a case where determination has not been made the predetermined number of times (step S 1208: No), the information processing device 100 returns to the process in step S 1201. On the other hand, in a case where determination has been made the predetermined number of times (step S1208: Yes), the information processing device 100 ends the second determination process.

(Third Determination Processing Procedure)

Next, an example of the third determination processing procedure executed by the information processing device 100 will be described with reference to FIG. 13. The third determination process is implemented by, for example, the CPU 301, a storage area such as the memory 302 or the recording medium 305, the network I/F 303, and the QPU 307 illustrated in FIG. 3.

FIG. 13 is a flowchart illustrating an example of the third determination processing procedure. In FIG. 13, the information processing device 100 applies the superposition state |s> to the n qubits (step S1301).

Next, the information processing device 100 multiplies the n qubits by $U_c(\gamma_1)U_x(\beta_1) \dots U_c(\gamma_p)U_x(\beta_p)$ according to the latest $(\gamma^*, \beta^*)$, thereby specifying the quantum state $|\psi(\gamma^*, \beta^*)>$ (step S1302). Then, the information processing device 100 conducts n-shot sampling on the quantum state $|\psi(\gamma^*, \beta^*)>$ and determines n classical states $z_1$ (step S1303).

Next, the information processing device 100 calculates the energy $E_1$ corresponding to each of the classical states $z_1$ and verifies whether or not $\min(E_1) < \min(E_0, E_1^*)$ holds (step S1304). Energy corresponding to $z_0$ is denoted by

$E_0$. Energy corresponding to $z_1^*$ is denoted by $E_1^*$. A classical state deemed to be optimal at the present time is represented by $z_1^*$.

Here, in a case where $\min(E_1) < \min(E_0, E_1^*)$ holds (step S1304: Yes), the information processing device 100 proceeds to the process in step S 1305. On the other hand, in a case where $\min(E_1) < \min(E_0, E_1^*)$ does not hold (step S1304: No), the information processing device 100 proceeds to the process in step S1306.

In step S 1305, the information processing device 100 determines $z_1^*$ as $\mathrm{argmin}(E_1)$ (step S1305). Any classical state $z_1$ taking $\min(E_1)$ among $E_1$ corresponding to each of the classical states $z_1$ is represented by $\mathrm{argmin}(E_1)$. Then, the information processing device 100 ends the third determination process.

In step S 1306, the information processing device 100 determines $z_1^*$, based on $E_1$ and the Hamming distance (step S1306). $E_1$ and the Hamming distance are denoted by, for example, $((E_1 - E_0) \times \text{Hamming distance}(z_1, z_0))^{-1}$. Then, the information processing device 100 ends the third determination process.

Here, the information processing device 100 may interchange the processes in some steps of each of the flowcharts in FIGs. 10 to 13. For example, the processes in steps S1002 and S1003 can be interchanged. The information processing device 100 may omit processes in some steps of each of the flowcharts in FIGs. 10 to 13. For example, the processes in steps S1006 and S1007 can be omitted.

As described above, according to the information processing device 100, the first value of a parameter of the quantum approximate optimization algorithm can be determined such that the energy corresponding to the quantum state of the quantum circuit of the quantum approximate optimization algorithm is locally minimized. According to the information processing device 100, the first solution to the combinatorial optimization problem can be calculated based on the Ising model corresponding to the combinatorial optimization problem. According to the information processing device 100, the second value of the parameter can be determined from the determined first value of the parameter such that the probability that the quantum state of the quantum circuit of the quantum approximate optimization algorithm matches the calculated first solution is maximized. According to the information processing device 100, the second solution to the combinatorial optimization problem can be calculated based on the quantum circuit of the quantum approximate optimization algorithm in which the determined second value of the parameter is set. This may allow the information processing device 100 to promote reduction of the expected time taken to accurately calculate the solution to the combinatorial optimization problem.

According to the information processing device 100, a series of processes of determining the first value, calculating the first solution, determining the second value, and calculating the second solution can be repeatedly executed until a predetermined condition is satisfied. This may allow the information processing device 100 to promote improvement in accuracy of calculating the solution to the combinatorial optimization problem.

According to the information processing device 100, calculation of the second solution a predetermined number of times can be adopted as the predetermined condition. This may allow the information processing device 100 to repeatedly execute the series of processes an appropriate number of times and to accurately calculate the solution to the combinatorial optimization problem.

According to the information processing device 100, the calculated second solution can be output. This may allow the information processing device 100 to make the second solution available outside, as a solution to the combinatorial optimization problem.

According to the information processing device 100, the process of calculating the first solution can be executed using an Ising machine that solves the combinatorial optimization problem. According to the information processing device 100, the process of determining the first value, the process of determining the second value, and the process of calculating the second solution can be executed using a quantum computing device that handles the quantum circuit of the quantum approximate optimization algorithm. This may allow the information processing device 100 to enable efficient calculation of the first solution and enable efficient calculation of the second solution.

According to the information processing device 100, the first solution to the combinatorial optimization problem can be calculated based on the Ising model using, for example, the Digital Annealer ™. This may allow the information processing device 100 to efficiently calculate the first solution.

Note that the information processing method described in the present embodiment can be implemented by executing a program prepared in advance in a computer such as a PC or a workstation. The information processing program described in the present embodiment is executed by being recorded on a computer-readable recording medium and being read from the recording medium by the computer. The recording medium is a hard disk, a flexible disk, a compact disc (CD)-ROM, a magneto-optical disc (MO), a digital versatile disc (DVD), or the like. In addition, the information processing program described in the present embodiment may be distributed via a network such as the Internet.

**Claims**

**1.** An information processing program comprising instructions which, when executed by a computer which is coupled to an Ising machine and a quantum processing unit, cause the computer to execute processing comprising:

> determining, for a quantum circuit of a quantum approximate optimization algorithm that corresponds to the combinatorial optimization problem, a first value of a parameter of the quantum approximate optimization algorithm such that energy that corresponds to a quantum state of the quantum circuit is locally minimized;
> calculating a first solution to the combinatorial optimization problem, by using the Ising machine that has an Ising model corresponding to the combinatorial optimization problem;
> determining a second value of the parameter from the determined first value of the parameter such that a probability that the quantum state of the quantum circuit matches the calculated first solution is maximized; and
> calculating a second solution to the combinatorial optimization problem, by causing the quantum processing unit to calculate the second solution based on the quantum circuit in which the determined second value of the parameter is set.

2. The information processing program according to claim 1, for causing the computer to repeatedly execute, until a predetermined condition is satisfied, the process comprising:

> newly calculating the first value of the parameter, based on the calculated second solution such that the energy that corresponds to the quantum state of the quantum circuit is locally minimized;
> newly calculating the first solution to the combinatorial optimization problem, based on the Ising model in which the calculated second solution is set as an initial value;
> newly determining the second value of the parameter from the newly determined first value of the parameter such that the probability that the quantum state of the quantum circuit matches the newly calculated first solution is maximized; and
> newly calculating the second solution to the combinatorial optimization problem, based on the quantum circuit in which the newly determined second value of the parameter is set.

3. The information processing program according to claim 2, wherein the predetermined condition is that the second solution is calculated a predetermined number of times.

4. The information processing program according to any one of claims 1 to 3, wherein the quantum processing unit is implemented in a computing device coupled to the computer via a network.

5. The information processing program according to any one of claims 1 to 4, wherein the Ising machine is implemented in a computing device coupled to the computer via a network.

6. An information processing method implemented by a computer, which is coupled to an Ising machine and a quantum processing unit, the information processing method comprising:

> the computer determining, for a quantum circuit of a quantum approximate optimization algorithm that corresponds to the combinatorial optimization problem, a first value of a parameter of the quantum approximate optimization algorithm such that energy that corresponds to a quantum state of the quantum circuit is locally minimized;
> the computer calculating a first solution to the combinatorial optimization problem, by using the Ising machine that has an Ising model corresponding to the combinatorial optimization problem;
> the computer determining a second value of the parameter from the determined first value of the parameter such that a probability that the quantum state of the quantum circuit matches the calculated first solution is maximized; and
> the computer calculating a second solution to the combinatorial optimization problem, by causing the quantum processing unit to calculate the second solution based on the quantum circuit in which the determined second value of the parameter is set.

7. An information processing apparatus coupled to an Ising machine and a quantum processing unit, the information processing apparatus comprising a control unit configured to perform processing comprising:

> determining, for a quantum circuit of a quantum approximate optimization algorithm that corresponds to the combinatorial optimization problem, a first value of a parameter of the quantum approximate optimization algorithm such that energy that corresponds to a quantum state of the quantum circuit is locally minimized;
> calculating a first solution to the combinatorial optimization problem, by using the Ising machine that has an Ising model corresponding to the combinatorial optimization problem;

determining a second value of the parameter from the determined first value of the parameter such that a probability that the quantum state of the quantum circuit matches the calculated first solution is maximized; and calculating a second solution to the combinatorial optimization problem, by causing the quantum processing unit to calculate the second solution based on the quantum circuit in which the determined second value of the parameter is set.

# FIG. 1

# FIG. 2

# FIG. 3

100

301
CPU

302
MEMORY

300

303
NETWORK I/F

304
RECORDING MEDIUM I/F

306
ISING MACHINE

307
QPU

210
NETWORK

305
RECORDING MEDIUM

# FIG. 4

400
STORAGE UNIT

100

401 ACQUISITION UNIT

402 FIRST DETERMINATION UNIT

403 FIRST CALCULATION UNIT

404 SECOND DETERMINATION UNIT

405 SECOND CALCULATION UNIT

406 OUTPUT UNIT

# FIG. 5

COMBINATORIAL OPTIMIZATION PROBLEM → | ISING MACHINE (306) | ↔ | CPU (301) | ↔ | QPU (307) | → SOLUTION TO COMBINATORIAL OPTIMIZATION PROBLEM

100

# FIG. 6

# FIG. 7

$$|0\rangle - \boxed{H} \quad e^{-i\gamma_1 H_{zc}} \quad e^{-i\beta_1 H_{xr}} \quad |\psi(\gamma,\beta)\rangle$$

# FIG. 8

FIG. 9

# FIG. 10

START

ACQUIRE COMBINATORIAL OPTIMIZATION PROBLEM min ($E = C(z)$) — S1001

EXECUTE FIRST DETERMINATION PROCESS — S1002

CALCULATE STATE $z_0$ RELEVANT TO SOLUTION TO $C(z)$ — S1003

EXECUTE SECOND DETERMINATION PROCESS — S1004

EXECUTE THIRD DETERMINATION PROCESS — S1005

HAS DETERMINATION BEEN MADE PREDETERMINED NUMBER OF TIMES? — S1006

NO

SET INITIAL VALUE OF ISING MACHINE — S1007

YES

OUTPUT $\min(C(z_0), C(z_1^*))$ — S1008

END

# FIG. 11

START

S1101

APPLY SUPERPOSITION STATE |s> TO n QUBITS

S1102

SPECIFY QUANTUM STATE $|\psi(\gamma, \beta)>$

S1103

MEASURE ENERGY $E(\gamma, \beta) = <\psi(\gamma, \beta)|C(z)|\psi(\gamma, \beta)>$

S1104

DETERMINE HYPERPARAMETER $(\gamma', \beta')$ OF QAOA

S1105

HAS DETERMINATION BEEN MADE PREDETERMINED NUMBER OF TIMES?

NO

YES

END

# FIG. 12

START

S1201

FIRST TIME? — NO

YES — S1202

$\gamma = \gamma'$, $\beta = \beta'$

S1203

$\gamma = \gamma^*$, $\beta = \beta^*$

S1204

APPLY SUPERPOSITION STATE |s> TO n QUBITS

S1205

SPECIFY QUANTUM STATE $|\psi(\gamma, \beta)>$

S1206

MEASURE PROBABILITY $p_{z0}(\gamma, \beta) = <\psi(\gamma, \beta)|z_0><z_0|\psi(\gamma, \beta)>$

S1207

DETERMINE HYPERPARAMETER $(\gamma^*, \beta^*)$ OF QAOA

S1208

NO — HAS DETERMINATION BEEN MADE PREDETERMINED NUMBER OF TIMES?

YES

END

# FIG. 13

```
          ( START )
              │
              │          ┌ S1301
    ┌─────────▼─────────┐
    │ APPLY SUPERPOSITION STATE │
    │    |s> TO n QUBITS        │
    └─────────┬─────────┘
              │          ┌ S1302
    ┌─────────▼─────────┐
    │  SPECIFY QUANTUM STATE   │
    │     |ψ(γ*, β*)>          │
    └─────────┬─────────┘
              │          ┌ S1303
    ┌─────────▼─────────┐
    │  DETERMINE n CLASSICAL   │
    │       STATES z₁          │
    └─────────┬─────────┘
              │          ┌ S1304
           ◇─────────◇           YES
          ◇  DOES min(E₁) < ◇──────────┐
          ◇ min(E₀, E₁*) HOLD? ◇        │
           ◇─────────◇                 │
              │ NO                      │
              │    ┌ S1306             │  ┌ S1305
    ┌─────────▼─────────┐   ┌──────────▼──────────┐
    │ DETERMINE z₁*, BASED ON E₁ │ │ DETERMINE z₁* AS argmin(E₁) │
    │  AND Hamming Distance      │ └──────────┬──────────┘
    └─────────┬─────────┘                   │
              │◄──────────────────────────────┘
              ▼
           ( END )
```

FIG. 13 is a flowchart showing steps S1301 through S1306.

- S1301: APPLY SUPERPOSITION STATE $|s\rangle$ TO n QUBITS
- S1302: SPECIFY QUANTUM STATE $|\psi(\gamma^*, \beta^*)\rangle$
- S1303: DETERMINE n CLASSICAL STATES $z_1$
- S1304: DOES $\min(E_1) < \min(E_0, E_1^*)$ HOLD?
  - YES → S1305: DETERMINE $z_1^*$ AS $\mathrm{argmin}(E_1)$
  - NO → S1306: DETERMINE $z_1^*$, BASED ON $E_1$ AND Hamming Distance

Europäisches
Patentamt

European
Patent Office

Office européen
des brevets

**EUROPEAN SEARCH REPORT**

**Application Number**

EP 24 22 3412

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHU LINGHUA ET AL: "Adaptive quantum approximate optimization algorithm for solving combinatorial problems on a quantum computer", PHYSICAL REVIEW RESEARCH, vol. 4, no. 3, 1 July 2022 (2022-07-01), XP093279608, College Park, US ISSN: 2643-1564, DOI: 10.1103/PhysRevResearch.4.033029 * the whole document * | 1-7 | INV. G06N10/60 |
| A | KIKUCHI SHUTA ET AL: "Hybrid Optimization Method Using Simulated-Annealing-Based Ising Machine and Quantum Annealer", JOURNAL OF THE PHYSICAL SOCIETY OF JAPAN, vol. 92, no. 12, 15 December 2023 (2023-12-15), XP093279609, ISSN: 0031-9015, DOI: 10.7566/JPSJ.92.124002 * Abstract, 2. Hybrid optimization method * | 1-7 | **TECHNICAL FIELDS SEARCHED (IPC)** G06N |

-/--

The present search report has been drawn up for all claims

| Place of search | Date of completion of the search | Examiner |
|---|---|---|
| The Hague | 27 May 2025 | Moro Pérez, Gonzalo |

EPO FORM 1503 03.82 (P04C01)

page 1 of 2

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Liu Chen-Yu ET AL: "Hybrid Gate-Based and Annealing Quantum Computing for Large-Size Ising Problems", Research Square, 5 August 2022 (2022-08-05), pages 1-14, XP093279610, DOI: 10.21203/rs.3.rs-4707131/v1 Retrieved from the Internet: URL:https://arxiv.org/abs/2208.03283 [retrieved on 2025-05-21] * Abstract, II. Large-system sampling approximation, III. Amplitude optimization, V. Calculations by gate-based quantum computers and quantum annealers * | 1-7 | |
| A | WO 2023/209828 A1 (FUJITSU LTD [JP]) 2 November 2023 (2023-11-02) * paragraph [0050]; figure 2 * * paragraph [0149] - paragraph [0190]; figures 22-25 * | 1-7 | TECHNICAL FIELDS SEARCHED (IPC) |

The present search report has been drawn up for all claims

| Place of search | Date of completion of the search | Examiner |
|---|---|---|
| The Hague | 27 May 2025 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 22 3412

This annex lists the patent family members relating to the patent documents cited in  the above-mentioned European search report.
The members are as contained in the European Patent Office EDP file on
The European Patent Office is in no way liable for these particulars which are merely given for the purpose of information.

27-05-2025

| Patent document cited in search report | Publication date | Patent family member(s) | Publication date |
|---|---|---|---|
| WO 2023209828 A1 | 02-11-2023 | EP 4517604 A1 | 05-03-2025 |
| | | JP 7667523 B2 | 23-04-2025 |
| | | JP WO2023209828 A1 | 02-11-2023 |
| | | US 2025037000 A1 | 30-01-2025 |
| | | WO 2023209828 A1 | 02-11-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021504805 A
- JP 2022509841 A
- WO 2022113720 A

- US 20140297247
- US 20110035194

**Non-patent literature cited in the description**

- **FARHI, EDWARD** ; **JEFFREY GOLDSTONE** ; **SAM GUTMANN**. A quantum approximate optimization algorithm. *arXiv: 1411.4028*, 2014
- **STREIF, MICHAEL** ; **MARTIN LEIB**. Forbidden subspaces for level-1 quantum approximate optimization algorithm and instantaneous quantum polynomial circuits. *Physical Review A*, 2020, vol. 102 (4), 042416
- **STREIF, MICHAEL** ; **MARTIN LEIB**. Training the quantum approximate optimization algorithm without access to a quantum processing unit. *Quantum Science and Technology*, 2020, vol. 5 (3), 034008
- Evaluating quantum approximate optimization algorithm: A case study. **SHAYDULIN, RUSLAN** ; **YURI ALEXEEV**. 2019 tenth international green and sustainable computing conference (IGSC). IEEE, 2019
- **TIBALDI, SIMONE et al.** Bayesian Optimization for QAOA. *arXiv:2209.03824*, 2022
- **KATZGRABER, HELMUT G. et al.** Seeking quantum speedup through spin glasses: The good, the bad, and the ugly. *Physical Review X*, 2015, vol. 5 (3), 031026
- **PERUZZO, ALBERTO et al.** A variational eigenvalue solver on a photonic quantum processor. *Nature communications*, 2014, vol. 5 (1), 4213